# FASCICULE DE BREVET EUROPEEN

(11) **EP 2 808 819 B1**
(45) Date de publication et mention de la délivrance du brevet: **10.07.2019**
(21) Numéro de dépôt: 14170432.0
(22) Date de dépôt: 28.05.2014
(51) Int. Cl.: H04L 9/32, H04L 29/06, G06F 21/33, G06F 21/34

(54) **Procédé de mise à jour de certificats dans un dispositif portable**
Aktualisierungsverfahren von Zertifikaten in einer tragbaren Vorrichtung
Method for updating certificates in a portable device

(30) Priorité: 29.05.2013 FR 1354880
(43) Date de publication de la demande: 03.12.2014
(73) Titulaire: Systancia, 68390 Sausheim (FR)
(72) Inventeur: Pierre, Frédéric, 75020 PARIS (FR)
(74) Mandataire: Regimbeau

(56) Documents cités:
- US-A1- 2006 047 965
- US-A1- 2011 126 001
- US-A1- 2011 161 662
- US-B1- 6 834 795

## Description

### DOMAINE DE L'INVENTION

La présente invention concerne de façon générale le domaine de la mise à jour de données sécurisées dans un dispositif portable.

L'invention concerne plus précisément la mise à jour de certificats numériques dans des dispositifs portables du type carte à puce.

Elle s'applique tout particulièrement aux cartes de Professionnel de Santé (CPS) qui sont des cartes à puce utilisées en France afin d'assurer la confidentialité de l'accès aux données personnelles dans le cadre des applications de santé communicantes. Ces cartes sont délivrées par le GIP ASIP Santé à chaque professionnel de santé qui en fait la demande.

### ETAT DE LA TECHNIQUE

La multiplication des échanges de données numériques rendue possible par le développement des réseaux informatiques comme le réseau Internet nécessite de pouvoir garantir la sécurité de ces échanges, et notamment leur confidentialité. A cet effet, divers processus cryptographiques de chiffrement des messages échangés ont été mis au point.

Une catégorie d'algorithmes de chiffrement largement employée est celle des algorithmes de chiffrement à clés asymétriques. De tels algorithmes utilisent des couples de clés privée et publique. Le principe de tels algorithmes est qu'un message chiffré par une clé publique ne peut être déchiffré que par le propriétaire de la clé privée correspondante. À l'inverse, seuls les possesseurs d'une clé publique pourront déchiffrer un message chiffré avec la clé privée correspondante.

Néanmoins de tels algorithmes ne suffisent pas à garantir l'identité des utilisateurs du réseau, et plus particulièrement la correspondance entre une clé publique et son propriétaire. En effet, une personne malintentionnée A pourrait publier une clé publique en faisant croire qu'elle appartient à une autre personne B. A pourrait ainsi se faire passer pour B auprès de destinataires de messages que A aurait chiffrés avec la clé privée associée à cette clé publique.

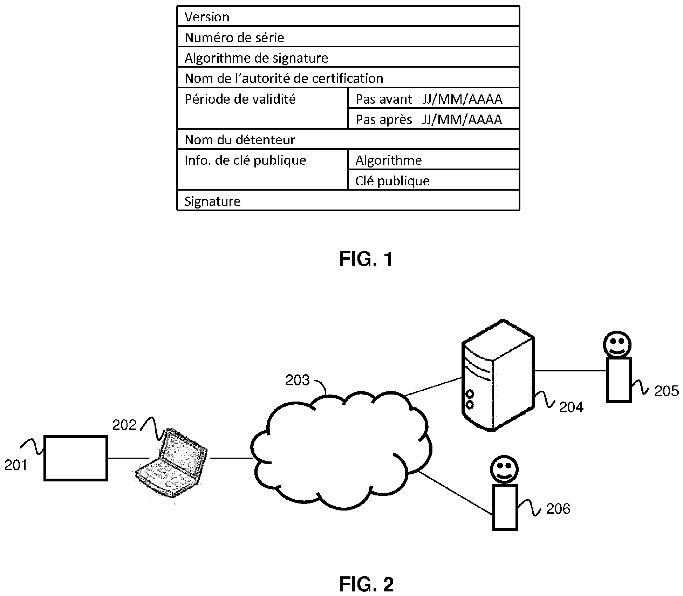

Afin de garantir la validité d'une clé publique, un mécanisme de certificat électronique a été créé. Un certificat électronique contient au moins une clé publique, des informations d'identification du propriétaire de la clé et une signature d'une autorité de certification (AC) permettant de garantir l'exactitude des informations du certificat. Cette autorité de certification joue donc le rôle d'un tiers de confiance par rapport aux différentes entités utilisant les certificats. Les deux formats de certificat les plus utilisés aujourd'hui sont X.509 et OpenPGP. Un exemple de structure de certificat de type X.509 est fourni en Figure 1. De tels certificats peuvent être stockés sur un dispositif portable, tel qu'une carte à puce. Le document US 6834795 décrit ainsi un procédé d'activation d'une carte à puce et de délivrance d'un certificat à stocker sur celle-ci.

Un tel certificat comporte notamment des informations définissant une période de validité pendant laquelle ce certificat peut être utilisé. A l'issue de cette période de validité, le certificat est dit expiré. L'utilisateur du certificat doit alors obtenir un nouveau certificat afin de pouvoir continuer à prouver son identité.

Dans le domaine de la santé, l'échange d'informations médicales à caractère personnel doit être possible en toute sécurité et dans le respect de la confidentialité des informations échangées. Les professionnels de santé ont donc recours à de tels certificats pour sécuriser les échanges de données personnelles dans le cadre des applications de santé, tel que la consultation du dossier médical personnel. De tels certificats sont stockés sur une carte CPS personnelle à chaque professionnel de santé et ont une durée de validité d'environ deux ou trois ans.

Il est essentiel pour un professionnel de santé d'assurer la mise à jour de son certificat avant l'expiration de celui-ci, faute de quoi celui-ci ne pourra plus exercer sa profession le temps du renouvellement. Actuellement, lorsqu'un certificat est en voie d'expiration, le détenteur de ce certificat est convoqué en personne à des fins d'authentification afin que son certificat soit mis à jour. Dans le cas d'un établissement de soin tel qu'un hôpital, la mise à jour des certificats de chacun des membres du personnel nécessite donc de convoquer celui-ci à intervalles réguliers à chaque fois qu'une mise à jour de son certificat est nécessaire.

Un tel renouvellement est décrit dans le document US 2011161662 divulguant une solution de mise à jour automatique d'un certificat stocké dans un poste client. Néanmoins, la simple mise à jour des certificats stockés sur la carte à puce d'un praticien peut s'avérer insuffisante pour assurer un bon fonctionnement du système d'authentification. Un serveur de gestion fournisseur des certificats peut également avoir besoin de commander des actions supplémentaires sur une telle carte à puce, telle que la suppression d'un certificat révoqué suite à la divulgation de la clé privée associée ou l'importation sur ladite carte à puce d'un nouveau certificat. Le document US 6 834 795 B1 décrit une solution d'activation d'une carte à puce connectée à un poste client. À la première utilisation de cette carte, un serveur d'administration authentifie l'utilisateur de ladite carte à partir d'un identifiant et d'un mot de passe que ce dernier saisi ainsi que d'informations d'identification stockées dans la carte. Le document US 2006/047965 A1 décrit une autre solution de mise à jour automatique d'un certificat numérique stocké dans un poste client relié à un serveur par l'intermédiaire d'un réseau. Le poste client peut envoyer une requête de mise à jour à une autorité de certification afin de mettre à jour un certificat dont la date d'expiration est proche. Un nouveau certificat est alors généré par l'autorité de certification et envoyé au poste client qui l'installe à la place du certificat précédent. Le document US 2011/126001 A1 divulgue une solution de mise à jour automatique d'un certificat numérique, dans laquelle un serveur détermine les certificats qui vont bientôt expirer et qui doivent être renouvelés. Pour chacun des certificats ainsi déterminés, le serveur demande à l'autorité de certification de fournir un certificat renouvelé. Les nouveaux certificats sont alors disponibles pour être transmis aux clients.

Il existe donc un besoin de proposer un outil de mise à jour sécurisée de certificat sur un dispositif portable automatisé et transparent pour le porteur dudit dispositif, permettant d'accélérer la mise à jour desdits certificats et de commander sur ledit dispositif portable des actions supplémentaires telles que celles décrites ci-dessus.

### RESUME DE L'INVENTION

A cet effet, l'invention a pour objet un procédé de mise à jour d'au moins un certificat stocké dans des moyens de stockage de données d'un dispositif portable apte à être connecté à un poste client, ledit poste client étant connecté via un réseau à un serveur stockant une liste de certificats caractérisé en ce qu'il comprend la mise en oeuvre d'étapes de :
- génération par les moyens de traitement de données du poste client d'une requête de récupération sur le serveur d'une liste d'actions commandées par un administrateur du serveur et de transmission de ladite requête audit serveur;
- détermination par des moyens de traitement de données du poste client d'au moins un certificat à mettre à jour sur le dispositif portable ;
- transmission par ledit serveur de ladite liste d'actions audit poste client;
- exécution par les moyens de traitement de données du poste client desdites actions ;
- pour chaque certificat à mettre à jour déterminé, génération et transmission par les moyens de traitement de données du poste client d'une requête de délivrance de nouveau certificat à destination d'une autorité de certification via ledit serveur;
- mise à jour par des moyens de traitement de données du serveur de ladite liste de certificats stockée sur le serveur à partir des nouveaux certificats délivrés par l'autorité de certification ;
- génération et transmission, par les moyens de traitement de données du poste client, d'une requête de récupération desdits nouveaux certificats à destination dudit serveur;
- réception, par les moyens de traitement du poste client, desdits nouveaux certificats ; et
- installation par les moyens de traitement du poste client sur ledit dispositif portable desdits nouveaux certificats récupérés.

Un tel procédé permet de réaliser de manière automatique la mise à jour d'un certificat sans nécessiter aucune démarche ni administrative, ni physique, ni informatique de la part du détenteur de celui-ci. Dans le cas de l'application d'un tel procédé à un établissement de grande ampleur telle qu'un hôpital, ce procédé permet de faire gagner un temps précieux à l'ensemble du personnel hospitalier en lui évitant toute démarche, mais aussi à l'administrateur du système informatique de l'établissement en lui évitant de devoir convoquer un par un les détenteurs de certificats à mettre à jour et d'avoir à réaliser manuellement la commande et l'installation des nouveaux certificats. L'étape de génération par les moyens de traitement de données du poste client d'une requête de récupération sur le serveur d'une liste d'actions commandées par un administrateur du serveur et de transmission de ladite requête audit serveur permet à un administrateur de commander l'exécution de certaines actions par le poste client sur le dispositif portable telles que forcer la suppression d'un certificat révoqué suite à la divulgation de la clé privée associée, ou commander l'importation sur le dispositif portable d'un nouveau certificat n'ayant pas été généré dans le cadre d'un processus de mise à jour.

L'étape de détermination par le poste client des certificats à mettre à jour peut comprendre la détermination par les moyens de traitement de données du poste client des certificats en voie d'expiration ou expirés sur ledit dispositif portable. Ainsi la détermination des certificats en voie d'expiration ou expirés ne nécessite aucune veille centralisée impliquant la mobilisation d'un dispositif ou d'un personnel dédié. La mise à jour des certificats en voie d'expiration est initiée automatiquement un certain temps avant leur expiration ce qui diminue très nettement le risque qu'un certificat arrive à expiration sans avoir été renouvelé, du fait par exemple d'un oubli de l'administrateur.

La détermination par les moyens de traitement de données du poste client des certificats en voie d'expiration ou expirés peut par exemple comprendre une comparaison de la date d'expiration des certificats avec la date courante.

D'autre part, la génération par les moyens de traitement de données du poste client d'une requête de délivrance de nouveau certificat peut requérir une confirmation d'un utilisateur du poste client. Ceci permet d'éviter le déclenchement d'une mise à jour des certificats du dispositif portable à un moment inopportun pour le détenteur de celui-ci.

Selon une possibilité de mise en oeuvre de l'invention, la requête de délivrance de nouveau certificat peut être générée à partir d'une clé publique obtenue suite à la mise en oeuvre d'étapes de :
- génération et stockage par des moyens de traitement de données du dispositif portable d'une nouvelle paire de clés comprenant une clé publique et une clé privée;
- transmission de ladite clé publique générée depuis le dispositif portable vers ledit poste client.

Ainsi la mise à jour du certificat comprend également le changement des clés privée et publique associées au certificat, ce qui permet d'augmenter le niveau de sécurité au cas où la clé privée précédente aurait été divulguée.

Par ailleurs, la transmission d'une requête de délivrance de nouveau certificat à l'autorité de certification peut être fonction de la validation de ladite requête par un administrateur du serveur. Ceci permet de maintenir une supervision humaine du processus de mise à jour des certificats pour éviter de déclencher inutilement la mise à jour d'un certificat, appartenant par exemple à une personne quittant bientôt son entreprise.

Si ladite requête de délivrance de nouveau certificat a été validée par l'administrateur, l'installation du nouveau certificat récupéré peut comprendre la suppression du certificat à mettre à jour et de la paire de clés stockée correspondants afin d'éviter l'encombrement de la mémoire du dispositif portable.

Au contraire si ladite requête de délivrance de nouveau certificat n'a pas été validée par l'administrateur, la nouvelle paire de clé générée correspondante peut être supprimée du dispositif portable, afin également d'éviter l'encombrement de la mémoire du dispositif portable.

L'invention propose également un procédé de mise à jour d'au moins un certificat stocké dans des moyens de stockage de données d'un dispositif portable apte à être connecté à un poste client, ledit poste client étant connecté via un réseau à un serveur stockant une liste de certificats caractérisé en ce qu'il comprend les étapes suivantes mises en oeuvre par des moyens de traitement de données du poste client :
- génération d'une requête de récupération sur le serveur d'une liste d'actions commandées par un administrateur du serveur et transmission de ladite requête audit serveur ;
- détermination d'au moins un certificat à mettre à jour sur le dispositif portable ;
- réception de ladite liste d'actions et exécution desdites actions ;
- pour chaque certificat à mettre à jour déterminé, génération et transmission d'une requête de délivrance de nouveau certificat à destination d'une autorité de certification via ledit serveur ;
- génération et transmission d'une requête de récupération desdits nouveaux certificats audit serveur dont la liste de certificats a été mise à jour à partir des nouveaux certificats délivrés par l'autorité de certification; réception desdits nouveaux certificats venant du serveur; et
- installation sur ledit dispositif portable desdits nouveaux certificats récupérés.

L'invention a également pour objet un procédé de mise à jour d'au moins un certificat stocké dans des moyens de stockage de données d'un dispositif portable apte à être connecté à un poste client, ledit poste client étant connecté via un réseau à un serveur stockant une liste de certificats caractérisé en ce qu'il comprend les étapes suivantes mises en oeuvre par des moyens de traitement de données dudit serveur :
- réception d'une requête de récupération sur le serveur d'une liste d'actions commandées par un administrateur du serveur, ladite requête ayant été générée et transmise par les moyens de traitement de données du poste client;
- transmission de ladite liste d'actions audit poste client;
- pour chaque certificat à mettre à jour déterminé par des moyens de traitement de données dudit poste client, réception d'une requête de délivrance de nouveau certificat, et transmission d'une requête de délivrance de nouveau certificat générée par les moyens de traitement de données dudit poste client à destination d'une autorité de certification;
- mise à jour de ladite liste de certificats à partir des nouveaux certificats délivrés par l'autorité de certification ;
- réception d'une requête de récupération desdits nouveaux certificats générée et transmise par lesdits moyens de traitement de données du poste client;
- transmission desdits nouveaux certificats récupérés audit poste client pour installation sur ledit dispositif portable.

L'invention a encore pour objet un programme d'ordinateur comprenant des instructions de code de programme pour l'exécution des étapes du procédé selon l'invention lorsque ledit programme est exécuté sur un ordinateur.

L'invention concerne par ailleurs un système pour la mise à jour de certificats comprenant au moins un poste client, au moins un dispositif portable mémorisant dans des moyens de stockage de données au moins un desdits certificats et un serveur, ledit système étant caractérisé en ce qu'il est configuré pour mettre en oeuvre un procédé selon l'invention.

L'invention a également pour objet un poste client comprenant une interface de communication avec un dispositif portable mémorisant dans des moyens de stockage de données au moins un certificat à mettre à jour, et une interface de communication avec un serveur stockant une liste de certificats caractérisé en ce qu'il comprend :
- un module de génération d'une requête de récupération sur le serveur d'une liste d'actions commandées par un administrateur du serveur et de transmission de ladite requête audit serveur ;
- un module de réception de ladite liste d'actions de d'exécution desdites actions ;
- un module de détermination d'au moins un certificat à mettre à jour sur le dispositif portable ;
- un module de génération et transmission, pour chaque certificat à mettre à jour déterminé, d'une requête de délivrance de nouveau certificat à destination d'une autorité de certification via ledit serveur ;
- un module de génération et transmission d'une requête de récupération desdits nouveaux certificats audit serveur dont la liste de certificats a été mise à jour à partir des nouveaux certificats délivrés par l'autorité de certification;
- un module de réception du serveur et d'installation sur ledit dispositif portable desdits nouveaux certificats récupérés.

L'invention concerne enfin un serveur comprenant une base de données stockant une liste de certificats et une interface de communication avec un poste client connecté à un dispositif portable, ledit dispositif portable mémorisant dans des moyens de stockage de données au moins un certificat à mettre à jour, caractérisé en ce qu'il comprend :
- un module de réception d'une requête de récupération sur le serveur d'une liste d'actions commandées par un administrateur du serveur, ladite requête ayant été générée et transmise par les moyens de traitement de données du poste client ;
- un module de transmission de ladite liste d'actions audit poste client;
- un module de réception du poste client et de transmission à une autorité de certification d'une requête de délivrance de nouveau certificat générée par des moyens de traitement de données dudit poste client, pour chaque certificat à mettre à jour déterminé par les moyens de traitement de données dudit poste client;
- un module de mise à jour de ladite liste de certificats à partir des nouveaux certificats délivrés par l'autorité de certification ;
- un module de réception d'une requête de récupération desdits nouveaux certificats générée et transmise par lesdits moyens de traitement de données du poste client;
- un module de transmission desdits nouveaux certificats récupérés audit poste client pour installation sur ledit dispositif portable.

Lesdits modules peuvent être des modules logiciels ou matériels.

Les avantages associés au programme d'ordinateur, au système, au poste client et au serveur proposés ci-dessus correspondent à ceux des procédés selon l'invention évoqués ci-dessus.

### DESCRIPTION DES FIGURES

D'autres caractéristiques et avantages ressortiront encore de la description qui suit, laquelle est purement illustrative et non limitative et doit être lue en regard des figures annexées, parmi lesquelles :
La figure 1 représente le format d'un certificat X.509,
La figure 2 est une représentation schématique d'une architecture de réseau dans laquelle sont mis en oeuvre les procédés selon l'invention,
La figure 3 est une représentation schématique d'un poste client selon un aspect de l'invention,
La figure 4 représente un ordinogramme illustrant les étapes du procédé de mise à jour de certificat selon un premier mode de réalisation de l'invention,
La figure 5 représente un ordinogramme illustrant les étapes du procédé de mise à jour de certificat selon un second mode de réalisation de l'invention.

### DESCRIPTION DETAILLEE D'AU MOINS UN MODE DE REALISATION

Par souci de clarté, seuls les éléments et étapes utiles à la compréhension de l'invention ont été représentées et seront décrits. En particulier les détails de génération de clés asymétriques ou de génération de certificats par une autorité de certification ne seront pas décrits, ces techniques étant en elles-mêmes connues.

La figure 2 représente une architecture de réseau dans laquelle sont mis en oeuvre les procédés selon l'invention.

Les procédés de mise à jour de certificat selon l'invention sont mis en oeuvre lorsqu'un détenteur d'un dispositif portable 201 stockant en mémoire un ou plusieurs certificats connecte son dispositif portable à un poste client 202.

Comme représenté sur la figure 2, ce poste client 202 est connecté par le biais d'un réseau informatique 203 à un serveur 204 géré par un administrateur 205. Ce serveur comprend une liste de certificats ; lesdits certificats pouvant être mise à jour par une autorité de certification 206 connectée audit réseau informatique.

Ledit dispositif portable 201 peut être un dispositif électronique apte à stocker des données sécurisées dans une mémoire.

Ledit dispositif portable peut être par exemple une carte à puce comportant un microprocesseur relié par un bus de données à une mémoire vive et à une mémoire non volatile réinscriptible telle qu'une mémoire flash ou une mémoire EEPROM. Le dispositif portable peut également comporter une unité cryptographique permettant de générer des paires de clés asymétriques. Ladite mémoire non volatile est adaptée pour stocker de manière sécurisée des données et des applications exécutables par ledit microprocesseur. Lesdites données stockées peuvent comprendre un identifiant de ladite carte, une clé privée et une clé publique associée générées par l'unité cryptographique, ainsi qu'un certificat garantissant la validité de ladite clé publique en attestant de l'identité du détenteur dudit dispositif portable. Ladite mémoire peut également comprendre des données de sécurité telles qu'un code PIN permettant d'authentifier un utilisateur souhaitant accéder aux données stockées en mémoire.

Ladite carte à puce peut comporter également une interface de communication avec le poste client. Cette interface peut consister en un ensemble de contacts électriques assurant une communication bidirectionnelle avec le microprocesseur de la carte. Alternativement, cette interface de communication peut consister en une interface sans fil mettant en oeuvre un protocole de communication comme le protocole NFC ou le protocole de communication Bluetooth.

A titre illustratif, ladite carte à puce peut être une carte de Professionnel de Santé (carte « CPS »). Ces cartes sont délivrées en France à chaque professionnel de santé qui en fait la demande afin d'assurer la confidentialité de l'accès aux données personnelles dans le cadre des applications de santé communicantes.

Selon une variante, ledit dispositif portable peut être un dispositif à mémoire flash doté d'une interface de communication USB, dite clé USB.

Par ailleurs, le serveur 204 représenté sur la Figure 2 peut être du type serveur ADAM, LDAP, AD. Ce serveur joue le rôle d'annuaire et stocke une base de données mémorisant un ensemble de certificats, dont les certificats stockés par le dispositif portable.

Des composants logiciels tels qu'un système de gestion de contenu (Content Management System « CMS ») et une suite logicielle nécessaire à la mise en oeuvre de l'invention peuvent être installés sur ledit serveur.

Ledit serveur peut comporter également une interface de communication réseau. Cette interface est utilisée pour relier le serveur au poste client et à une autorité de certification apte à délivrer de nouveaux certificats.

Par ailleurs, le serveur peut comporter également une interface d'entrée-sortie utilisable par un administrateur pour exécuter des commandes sur le serveur, par exemple afin de mettre à jour la base de données hébergée par le serveur. Alternativement, l'administrateur joue le rôle d'autorité de certification locale. Il est alors apte en utilisant le serveur à délivrer de nouveaux certificats.

Le réseau 203 représenté sur la Figure 2 et reliant le poste client 202, le serveur 204 et l'autorité de certification 206 consiste à titre d'exemple en un réseau local Ethernet, un réseau local sans fil, le réseau Internet, un réseau de téléphonie mobile... Les communications sur ce réseau peuvent être sécurisées, notamment par chiffrement des données échangées.

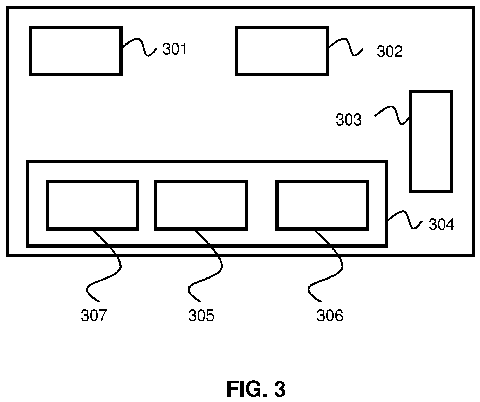

Le système représenté en Figure 2 comporte enfin un poste client 202 selon un aspect de l'invention représenté plus précisément en Figure 3.

Le poste client peut comporter un dispositif d'affichage 301 tel qu'un écran permettant d'afficher des informations à destinations de l'utilisateur du poste client. Le poste client peut comporter également un dispositif de saisie 302, tel qu'un ensemble clavier-souris, permettant audit utilisateur de saisir des données. Le poste client peut comporter par ailleurs une interface de communication 303 avec le dispositif portable. Cette interface de communication peut consister en un lecteur NFC, un lecteur de carte à puce, un port et un contrôleur USB, une interface Bluetooth...

Le poste client peut comporter également une unité centrale 304 comprenant un processeur de traitement 305, une mémoire vive et une mémoire non volatile réinscriptible 306 ainsi qu'une interface de communication 307 utilisée pour connecter le poste client audit réseau, telle qu'une interface Ethernet, une interface Wifi, etc.

Un composant logiciel nécessaire à la mise en oeuvre de l'invention peut être installé sur ledit serveur.

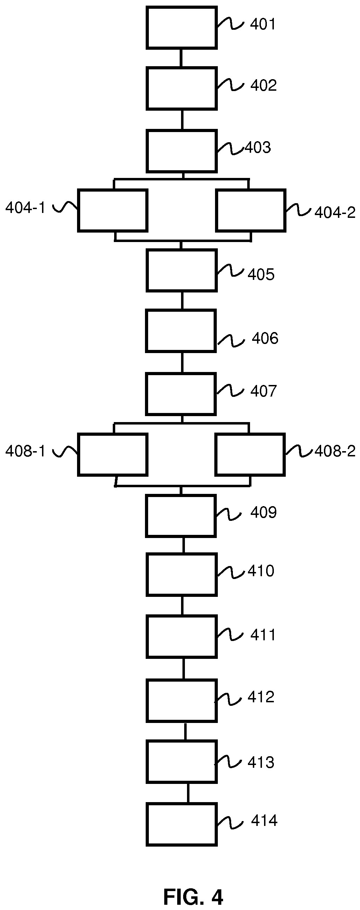

La figure 4 représente un ordinogramme illustrant les étapes du procédé de mise à jour de certificat selon un premier mode de réalisation de l'invention.

A l'étape 401, lorsqu'un détenteur d'un dispositif portable stockant en mémoire un ou plusieurs certificats connecte son dispositif portable à un poste client, une application spécifique se lance sur le poste client et permet au détenteur de s'authentifier à l'aide du code PIN stocké par le dispositif portable.

A l'étape 402, une fois cette authentification réussie, ladite application accède au contenu de la mémoire du dispositif portable et charge sur le poste client les certificats stockés dans cette mémoire.

A l'étape 403, ladite application détermine ensuite parmi ces certificats les certificats à mettre à jour.

Selon le premier mode de réalisation de l'invention, cette détermination consiste à déterminer parmi les certificats stockés sur ledit dispositif portable les certificats en voie d'expiration ou déjà expirés. A titre d'exemple, ladite application peut comparer la date de fin de période de validité de chaque certificat avec la date courante. Les certificats pour lesquels la date courante est postérieure à la date de fin de période de validité sont dits expirés. Les certificats pour lesquels le délai entre la date courante et la date de fin de période de validité est inférieur à un seuil prédéterminé sont dits en voie d'expiration. Par exemple, ce délai peut être égal à trente jours. La valeur de ce seuil prédéterminé peut être mémorisée dans un profil de configuration de ladite application.

Cette détermination est donc réalisée automatiquement par le poste client à chaque connexion d'un détenteur de dispositif portable. Ainsi la détermination des certificats en voie d'expiration ou expirés ne nécessite aucune veille centralisée impliquant la mobilisation d'un dispositif ou d'un personnel dédié.

A l'issue de la détermination par le poste client des certificats en voie d'expiration ou expirés, une information relative aux certificats en voie d'expiration ou expirés peut être générée.

Ladite application va ensuite mettre à jour les certificats déterminés comme en voie d'expiration ou expirés.

Dans une première variante, à l'étape 404-1, la mise à jour d'un certificat est conditionnée par l'acceptation de cette mise à jour par le détenteur du dispositif portable. Ainsi, une fenêtre pop-up peut être affichée sur le dispositif d'affichage du poste client demandant au détenteur du dispositif portable de confirmer à l'aide du dispositif de saisie du poste client qu'il autorise la mise à jour dudit certificat ou de l'ensemble des certificats expirés ou en voie d'expiration stockés sur le dispositif portable. Ceci permet d'éviter le déclenchement d'une mise à jour des certificats du dispositif portable à un moment inopportun pour le détenteur de celui-ci.

Dans une seconde variante, à l'étape 404-2, le déclenchement de la mise à jour d'un ou plusieurs certificats stockés sur le dispositif portable peut être automatique, permettant ainsi de ne requérir aucune action du détenteur du dispositif ultérieurement à son authentification sur le poste client.

Le choix de l'exécution de la première ou de la seconde variante par l'application peut être fonction du profil de configuration de l'application s'exécutant sur le poste client.

L'étape suivante 405 de mise à jour des certificats expirés ou en voie d'expiration du dispositif portable consiste en la génération par le dispositif portable, avantageusement par l'unité cryptographique de celui-ci, pour chaque certificat à mettre à jour, d'une paire de clés asymétriques comprenant une clé privée et une clé publique, en réponse à l'envoi au dispositif portable par l'application s'exécutant sur le poste client d'une commande de génération d'une paire de clés. Chaque paire de clés générée est stockée de manière sécurisée dans la mémoire réinscriptible non volatile du dispositif portable. Les clés publiques générées pour les certificats à mettre à jour sont transmises par le dispositif portable au poste client. Pour chaque génération d'une paire de clés, une information indiquant le résultat de cette génération peut être transmise au serveur.

Pour chacune de ces clés publiques, l'application s'exécutant sur le poste client va ensuite générer à l'étape 406 une requête de délivrance d'un nouveau certificat destinée à l'autorité de certification.

Chaque requête de délivrance de certificat comporte ladite clé publique générée par le dispositif portable. Cette requête peut être une requête du type certificate signing request (CSR) ou certification request. Cette requête comporte également au moins une information d'identification du détenteur du dispositif portable.

Selon un autre mode de réalisation de l'invention, la mise à jour des certificats du dispositif portable peut consister à prolonger la période de validité des certificats en voie d'expiration tout en conservant leurs clés publiques.

Lors de l'étape 407 suivante, les requêtes générées sont transmises au serveur par l'application s'exécutant sur le poste client.

Dans un mode de réalisation, la base de données du serveur stocke une liste contenant les requêtes de délivrance de certificats. Cette liste est alors mise à jour en fonction des requêtes reçues.

L'information relative aux certificats en voie d'expiration ou expirés peut également être transmise au serveur, par exemple en même temps que les requêtes de délivrance de certificats. Cette information est utilisée par le serveur pour mettre à jour une liste des certificats dont la mise à jour a été initiée par le poste client.

Selon une première variante, à l'étape 408-1, les requêtes transmises au serveur sont soumises à l'approbation de l'administrateur du serveur. Cet administrateur valide ou rejette chacune des requêtes transmises au serveur par le poste client. Ceci permet de maintenir une supervision humaine du processus de mise à jour des certificats pour éviter de déclencher inutilement la mise à jour d'un certificat, appartenant par exemple à une personne quittant bientôt son entreprise.

Selon une seconde variante aucune action humaine n'est requise à l'étape 408-2 et le traitement des requêtes se poursuit automatiquement.

Lors de l'étape 409 suivante, les requêtes validées par l'administrateur, ou bien l'ensemble des requêtes transmises au serveur dans le cas d'un traitement automatique, sont transmises à l'autorité de certification. Alternativement, l'administrateur du serveur joue le rôle d'autorité de certification locale. Aucune requête n'est alors transmise à une autorité de certification distante. Les requêtes sont au contraire traitées directement sur le serveur par l'administrateur.

Lors de l'étape 410 suivante l'autorité de certification répond à chaque requête de délivrance de certificat reçue, soit en générant un nouveau certificat à partir de la clé publique et de l'au moins une information d'identification du détenteur du dispositif portable transmises dans ladite requête de certificat et en signant le nouveau certificat à l'aide de sa propre clé privée, soit en refusant la requête.

Chaque nouveau certificat généré comporte donc notamment une nouvelle clé publique, une nouvelle date de validité et un nouveau numéro de série.

Lors de l'étape 411, l'administrateur met à jour la base de données stockée sur le serveur, notamment en supprimant les requêtes traitées de la liste des requêtes, et le cas échéant en mettant à jour la liste des certificats à partir des nouveaux certificats générés et en supprimant de cette liste les anciens certificats correspondants.

Selon une variante de l'invention, une information relative aux requêtes non validées par l'administrateur est stockée par l'administrateur sur le serveur.

A l'étape 412 suivante, le poste client génère et transmet au serveur une requête de récupération des nouveaux certificats générés. Cette requête peut être transmise par le poste client à l'expiration d'un délai débutant lors de l'envoi par le poste client au serveur d'une requête de délivrance de certificat.

En réponse à cette requête de récupération, à l'étape 413 le serveur transmet au poste client les nouveaux certificats générés par l'autorité de certification.

Selon une variante, le serveur transmet également en réponse à la requête de récupération des nouveaux certificats une information relative aux requêtes refusées.

A l'étape 414 suivante, la mise à jour du dispositif portable est réalisée par l'application s'exécutant sur le poste client en fonction des nouveaux certificats reçus et de l'information relative aux requêtes refusées.

Les nouveaux certificats récupérés sont alors installés par le poste client sur le dispositif portable. Pour chaque requête de délivrance de nouveau certificat validée par l'administrateur et par l'autorité de certification, l'installation dudit nouveau certificat récupéré comprend la suppression du certificat à mettre à jour et de l'ancienne paire de clés stockée correspondants. Pour chaque requête de délivrance de nouveau certificat refusée par l'administrateur ou par l'autorité de certification, la nouvelle paire de clé générée correspondante est supprimée dudit dispositif portable. Une information indiquant le résultat de l'installation des nouveaux certificats peut être transmise au serveur.

Dans une variante, l'administrateur peut commander l'exécution de certaines actions par le poste client sur le dispositif portable. Pour ceci, l'administrateur met à jour sur le serveur une liste d'actions à exécuter, parmi lesquelles la suppression d'un certificat sur le dispositif portable, la génération d'une nouvelle paire de clés sur le dispositif portable, l'importation d'un certificat sur le dispositif portable.

Ceci permet par exemple de forcer la suppression d'un certificat révoqué suite à la divulgation de la clé privée associée, ou de commander l'importation sur le dispositif portable d'un nouveau certificat n'ayant pas été généré dans le cadre d'un processus de mise à jour.

Le poste client envoie une requête d'actions au serveur, qui lui retransmet en réponse la liste d'actions à exécuter commandées par l'administrateur. Ces actions sont ensuite exécutées par le poste client.

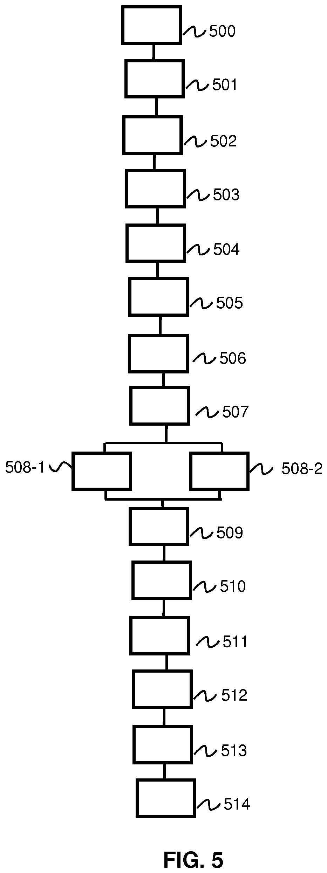

La figure 5 illustre les étapes du procédé de mise à jour de certificat selon un second mode de réalisation selon lequel la détermination par le poste client des certificats à mettre à jour sur le dispositif portable est précédée de l'envoi par le poste client au serveur d'une requête d'actions commandées par un administrateur du serveur. Dans ce mode de réalisation, la liste d'actions à exécuter reçue par le poste client comprend au moins une commande de génération d'une nouvelle paire de clés.

Le processus de mise à jour de certificat selon ce deuxième mode de réalisation débute par une étape 500 au cours de laquelle l'administrateur met à jour dans la base de données du serveur une liste d'actions à exécuter par le poste client.

L'étape 501 suivante est identique à l'étape 401 du premier mode de réalisation de l'invention.

A l'étape 502, le poste client génère et envoie une requête d'actions au serveur pour déterminer si des actions à exécuter sont commandées par l'administrateur du serveur.

A l'étape 503, le serveur envoie au poste client la liste d'actions à exécuter commandées par l'administrateur stockée dans sa base de données.

A l'étape 504, le poste client détermine les certificats du dispositif portable à mettre à jour. Il s'agit des certificats pour lesquels la génération d'une nouvelle paire de clé est commandée par la liste d'action envoyée par le serveur.

Les étapes 505 à 514 du second mode de réalisation de l'invention illustré en Figure 5 sont identiques aux étapes 405 à 414 du premier mode de réalisation de l'invention illustré en Figure 4.

Selon un troisième mode de réalisation de l'invention, le processus de mise à jour des certificats du dispositif portable s'exécute conformément au premier mode de réalisation et une requête d'action est émise par le poste client à destination du serveur en même temps que la requête de délivrance de certificat (étape 407) ou que la requête de récupération des nouveaux certificats générés (étape 412). Ainsi, le poste client peut vérifier au cours d'un processus de mise à jour de certificat si l'administrateur a commandé l'exécution de certaines actions sous la forme d'une liste d'actions stockée dans la base de données du serveur, et commander ensuite le cas échéant l'exécution desdites actions sur le dispositif portable.

Ceci permet d'intégrer l'exécution d'actions commandées par l'administrateur à un processus de mise à jour de certificat tout en limitant la quantité de messages envoyés sur le réseau.

Selon l'un quelconque des modes de réalisation décrits ci-dessus, il peut être avantageusement prévu de conserver dans la base de données du serveur un historique de toutes les actions exécutées sur le dispositif portable et de leur résultat (succès ou échec) afin que l'administrateur puisse déterminer quelles actions ont échoué pendant le processus de mise à jour et prendre les mesures adaptées. Cet historique peut être tenu à jour notamment à partir de l'information relative aux certificats en voie d'expiration ou expirés générée par le poste client, de l'information relative aux requêtes non validées par l'administrateur, de l'information indiquant le résultat de la génération d'une paire de clé et de l'information indiquant le résultat de l'installation des nouveaux certificats.

Selon d'autres aspects, l'invention concerne également le poste client, le serveur ainsi que le système comprenant au moins un tel poste client et un tel serveur configurés pour mettre en oeuvre les procédés décrits dans ces différents modes de réalisation ainsi que les programmes d'ordinateur comprenant des instructions de code de programme pour l'exécution des étapes desdits procédés.

## Revendications

1. Procédé de mise à jour d'au moins un certificat stocké dans des moyens de stockage de données d'un dispositif portable (201) apte à être connecté à un poste client (202), ledit poste client étant connecté via un réseau (203) à un serveur (204) stockant une liste de certificats **caractérisé en ce qu'**il comprend la mise en oeuvre d'étapes de :
- génération par les moyens de traitement de données du poste client d'une requête de récupération sur le serveur d'une liste d'actions commandées par un administrateur du serveur et de transmission de ladite requête audit serveur;
- détermination (403, 504) par des moyens de traitement de données du poste client d'au moins un certificat à mettre à jour sur le dispositif portable ;
- transmission par ledit serveur de ladite liste d'actions audit poste client;
- exécution par les moyens de traitement de données du poste client desdites actions ;
- pour chaque certificat à mettre à jour déterminé, génération (406, 506) et transmission (407, 507) par les moyens de traitement de données du poste client d'une requête de délivrance de nouveau certificat à destination d'une autorité de certification via ledit serveur;
- mise à jour (411, 511) par des moyens de traitement de données du serveur de ladite liste de certificats stockée sur le serveur à partir des nouveaux certificats délivrés par l'autorité de certification ;
- génération et transmission, par les moyens de traitement de données du poste client, d'une requête de récupération (412, 512) desdits nouveaux certificats à destination dudit serveur transmission (413) par le serveur des nouveaux certificats à destination du poste client ;
- installation (414, 514) par les moyens de traitement du poste client sur ledit dispositif portable desdits nouveaux certificats récupérés.

2. Procédé de mise à jour selon la revendication 1 **caractérisé en ce que** ladite étape de détermination (403) par le poste client des certificats à mettre à jour comprend la détermination par les moyens de traitement de données du poste client des certificats en voie d'expiration ou expirés sur ledit dispositif portable.

3. Procédé de mise à jour selon la revendication 2 **caractérisé en ce que** la détermination par les moyens de traitement de données du poste client des certificats en voie d'expiration ou expirés comprend une comparaison de la date d'expiration des certificats avec la date courante.

4. Procédé de mise à jour selon l'une quelconque des revendications précédentes **caractérisé en ce que** la génération (406) par les moyens de traitement de données du poste client d'une requête de délivrance de nouveau certificat requiert une confirmation (404) d'un utilisateur du poste client.

5. Procédé de mise à jour selon l'une quelconque des revendications précédentes **caractérisé en ce que** ladite requête de délivrance de nouveau certificat est générée à partir d'une clé publique obtenue suite à la mise en oeuvre d'étapes de :
- génération et stockage (405) par des moyens de traitement de données du dispositif portable d'une nouvelle paire de clés comprenant une clé publique et une clé privée;
- transmission (405) de ladite clé publique générée depuis le dispositif portable vers ledit poste client.

6. Procédé de mise à jour selon l'une quelconque des revendications précédentes **caractérisé en ce que** la transmission (409) d'une requête de délivrance de nouveau certificat à ladite autorité de certification est fonction de la validation (408) de ladite requête par un administrateur dudit serveur.

7. Procédé de mise à jour selon la revendication 6 **caractérisé en ce que** si ladite requête de délivrance de nouveau certificat a été validée par l'administrateur, l'installation (414) dudit nouveau certificat récupéré comprend la suppression dudit certificat à mettre à jour et de la paire de clés stockée correspondants.

8. Procédé de mise à jour selon l'une quelconque des revendications 6 ou 7, **caractérisé en ce que** si ladite requête de délivrance de nouveau certificat n'a pas été validée par l'administrateur, la nouvelle paire de clé générée correspondante est supprimée dudit dispositif portable (414).

9. Procédé de mise à jour d'au moins un certificat stocké dans des moyens de stockage de données d'un dispositif portable apte à être connecté à un poste client (202), ledit poste client étant connecté via un réseau (203) à un serveur (204) stockant une liste de certificats **caractérisé en ce qu'**il comprend les étapes suivantes mises en oeuvre par des moyens de traitement de données du poste client :
- génération d'une requête de récupération sur le serveur d'une liste d'actions commandées par un administrateur du serveur et de transmission de ladite requête audit serveur;
- détermination (403) d'au moins un certificat à mettre à jour sur le dispositif portable ;
- réception de ladite liste d'actions et exécution desdites actions ;
- pour chaque certificat à mettre à jour déterminé, génération (406) et transmission (407) d'une requête de délivrance de nouveau certificat à destination d'une autorité de certification via ledit serveur ;
- génération et transmission (412) d'une requête de récupération desdits nouveaux certificats audit serveur dont la liste de certificats a été mise à jour à partir des nouveaux certificats délivrés par l'autorité de certification;
- réception par le poste client des certificats nouveaux; et
- installation (414) sur ledit dispositif portable desdits nouveaux certificats récupérés.

10. Procédé de mise à jour d'au moins un certificat stocké dans des moyens de stockage de données d'un dispositif portable (201) apte à être connecté à un poste client (202), ledit poste client étant connecté via un réseau (203) à un serveur (204) stockant une liste de certificats **caractérisé en ce qu'**il comprend les étapes suivantes mises en oeuvre par des moyens de traitement de données dudit serveur :
- réception d'une requête de récupération sur le serveur d'une liste d'actions commandées par un administrateur du serveur, ladite requête ayant été générée et transmise par les moyens de traitement de données du poste client;
- transmission de ladite liste d'actions audit poste client;
- pour chaque certificat à mettre à jour déterminé par des moyens de traitement de données dudit poste client, réception d'une requête de délivrance de nouveau certificat venant du poste client, et transmission de la requête de délivrance de nouveau certificat générée par les moyens de traitement de données dudit poste client à destination d'une autorité de certification;
- mise à jour de ladite liste de certificats à partir des nouveaux certificats délivrés par l'autorité de certification ;
- réception d'une requête de récupération desdits nouveaux certificats générée et transmise par lesdits moyens de traitement de données du poste client;
- transmission desdits nouveaux certificats récupérés audit poste client pour installation sur ledit dispositif portable.

11. Programme d'ordinateur comprenant des instructions de code de programme pour l'exécution des étapes du procédé selon l'une quelconque des revendications précédentes lorsque ledit programme est exécuté sur un ordinateur.

12. Système pour la mise à jour de certificats comprenant au moins un poste client (202), au moins un dispositif portable (201) mémorisant dans des moyens de stockage de données au moins un desdits certificats et un serveur (204), ledit système étant **caractérisé en ce qu'**il est configuré pour mettre en oeuvre un procédé selon l'une quelconque des revendications 1 à 10.

13. Poste client (202) comprenant une interface de communication (303) avec un dispositif portable mémorisant dans des moyens de stockage de données au moins un certificat à mettre à jour, et une interface de communication (307) avec un serveur stockant une liste de certificats **caractérisé en ce qu'**il comprend :
- un module de génération d'une requête de récupération sur le serveur d'une liste d'actions commandées par un administrateur du serveur et de transmission de ladite requête audit serveur ;
- un module de réception de ladite liste d'actions de d'exécution desdites actions ;
- un module de détermination d'au moins un certificat à mettre à jour sur le dispositif portable ;
- un module de génération et transmission, pour chaque certificat à mettre à jour déterminé, d'une requête de délivrance de nouveau certificat à destination d'une autorité de certification via ledit serveur ;
- un module de génération et transmission d'une requête de récupération desdits nouveaux certificats audit serveur dont la liste de certificats a été mise à jour à partir des nouveaux certificats délivrés par l'autorité de certification;
- un module de réception du serveur et d'installation sur ledit dispositif portable desdits nouveaux certificats récupérés.

14. Serveur (204) comprenant une base de données stockant une liste de certificats et une interface de communication avec un poste client (202) connecté à un dispositif portable (201), ledit dispositif portable mémorisant dans des moyens de stockage de données au moins un certificat à mettre à jour, **caractérisé en ce qu'**il comprend :
- un module de réception d'une requête de récupération sur le serveur d'une liste d'actions commandées par un administrateur du serveur, ladite requête ayant été générée et transmise par les moyens de traitement de données du poste client ;
- un module de transmission de ladite liste d'actions audit poste client;
- un module de réception du poste client et de transmission à une autorité de certification d'une requête de délivrance de nouveau certificat générée par des moyens de traitement de données dudit poste client, pour chaque certificat à mettre à jour déterminé par les moyens de traitement de données dudit poste client;
- un module de mise à jour de ladite liste de certificats à partir des nouveaux certificats délivrés par l'autorité de certification ;
- un module de réception d'une requête de récupération desdits nouveaux certificats générée et transmise par lesdits moyens de traitement de données du poste client;
- un module de transmission desdits nouveaux certificats récupérés audit poste client pour installation sur ledit dispositif portable.

## Patentansprüche

1. Aktualisierungsverfahren mindestens eines Zertifikats, das in Datenspeichermitteln einer tragbaren Vorrichtung (201) gespeichert ist, die imstande ist, mit einem Client-Arbeitsplatz (202) verbunden zu werden, wobei der Client-Arbeitsplatz über ein Netzwerk (203) mit einem Server (204) verbunden ist, der eine Liste mit Zertifikaten speichert, **dadurch gekennzeichnet, dass** es die Umsetzung der folgenden Schritte umfasst:
- Erzeugen durch Datenverarbeitungsmittel des Client-Arbeitsplatzes einer Anfrage zum Abrufen auf dem Server einer Liste mit durch einen Administrator des Servers gesteuerten Aktionen und Übertragen der Anfrage an den Server;
- Bestimmen (403, 504) durch Datenverarbeitungsmittel des Client-Arbeitsplatzes mindestens eines Zertifikats, das auf der tragbaren Vorrichtung zu aktualisieren ist;
- Übertragen durch den Server der Liste mit Aktionen an den Client-Arbeitsplatz;
- Ausführen der Aktionen durch die Datenverarbeitungsmittel des Client-Arbeitsplatzes;
- für jedes bestimmte zu aktualisierende Zertifikat Erzeugen (406, 506) und Übertragen (407, 507) durch die Datenverarbeitungsmittel des Client-Arbeitsplatzes einer Anfrage zur Ausstellung eines neuen Zertifikats an eine Zertifizierungsautorität über den Server;
- Aktualisieren (411, 511) durch die Datenverarbeitungsmittel des Servers der auf dem Server gespeicherten Liste mit Zertifikaten aus den neuen durch die Zertifizierungsautorität ausgestellten Zertifikaten;
- Erzeugen und Übertragen durch die Datenverarbeitungsmittel des Client-Arbeitsplatzes einer Anfrage zum Abrufen (412, 512) der neuen Zertifikate an den Server; Übertragen (413) durch den Server der neuen Zertifikate an den Client-Arbeitsplatz;
- Installieren (414, 514) der neuen abgerufenen Zertifikate durch die Verarbeitungsmittel des Client-Arbeitsplatzes auf der tragbaren Vorrichtung.

2. Aktualisierungsverfahren nach Anspruch 1, **dadurch gekennzeichnet, dass** der Bestimmungsschritt (403) der zu aktualisierenden Zertifikate durch den Client-Arbeitsplatz das Bestimmen durch die Datenverarbeitungsmittel des Client-Arbeitsplatzes der auslaufenden oder ausgelaufenen Zertifikate auf der tragbaren Vorrichtung umfasst.

3. Aktualisierungsverfahren nach Anspruch 2, **dadurch gekennzeichnet, dass** das Bestimmen durch die Datenverarbeitungsmittel des Client-Arbeitsplatzes der auslaufenden oder ausgelaufenen Zertifikate einen Vergleich des Auslaufdatums der Zertifikate mit dem aktuellen Datum umfasst.

4. Aktualisierungsverfahren nach einem der vorstehenden Ansprüche, **dadurch gekennzeichnet, dass** das Erzeugen (406) durch die Datenverarbeitungsmittel des Client-Arbeitsplatzes einer Anfrage zum Abrufen eines neuen Zertifikats eine Bestätigung (404) eines Nutzers des Client-Arbeitsplatzes erfordert.

5. Aktualisierungsverfahren nach einem der vorstehenden Ansprüche, **dadurch gekennzeichnet, dass** die Anfrage zum Abrufen eines neuen Zertifikats aus einem öffentlichen Schlüssel erzeugt wird, der nach dem Umsetzen der folgenden Schritte erhalten wird:
- Erzeugen und Speichern (405) durch die Datenverarbeitungsmittel der tragbaren Vorrichtung eines neuen Schlüsselpaares, einen öffentlichen Schlüssel und einen privaten Schlüssel umfassend;
- Übertragen (405) des erzeugten öffentlichen Schlüssels von der tragbaren Vorrichtung an den Client-Arbeitsplatz.

6. Aktualisierungsverfahren nach einem der vorstehenden Ansprüche, **dadurch gekennzeichnet, dass** das Übertragen (409) eines Antrags zum Ausstellen eines neuen Zertifikats an die Zertifizierungsautorität von der Bestätigung (408) des Antrags durch einen Administrator des Servers abhängig ist.

7. Aktualisierungsverfahren nach Anspruch 6, **dadurch gekennzeichnet, dass**, wenn der Antrag zum Ausstellen eines neuen Zertifikats durch den Administrator bestätigt worden ist, das Installieren (414) des abgerufenen neuen Zertifikats das Löschen vom jeweiligen zu aktualisierenden Zertifikat und gespeicherten Schlüsselpaar umfasst.

8. Aktualisierungsverfahren nach einem der Ansprüche 6 oder 7, **dadurch gekennzeichnet, dass**, wenn der Antrag zum Ausstellen eines neuen Zertifikats durch den Administrator nicht bestätigt worden ist, das entsprechende neue erzeugte Schlüsselpaar von der tragbaren Vorrichtung (414) gelöscht wird.

9. Aktualisierungsverfahren mindestens eines Zertifikats, das in Datenspeichermitteln einer tragbaren Vorrichtung gespeichert ist, die imstande ist, mit einem Client-Arbeitsplatz (202) verbunden zu werden, wobei der Client-Arbeitsplatz über ein Netzwerk (203) mit einem Server (204) verbunden ist, der eine Liste mit Zertifikaten speichert, **dadurch gekennzeichnet, dass** es die folgenden Schritte umfasst, die durch Datenverarbeitungsmittel des Client-Arbeitsplatzes umgesetzt werden:
- Erzeugen einer Anfrage zum Abrufen auf dem Server einer Liste mit durch einen Administrator des Servers gesteuerten Aktionen und Übertragen der Anfrage an den Server;
- Bestimmen (403) mindestens eines Zertifikats, das auf der tragbaren Vorrichtung zu aktualisieren ist;
- Empfangen der Liste mit Aktionen und Ausführen der Aktionen;
- für jedes bestimmte zu aktualisierende Zertifikat Erzeugen (406) und Übertragen (407) einer Anfrage zur Ausstellung eines neuen Zertifikats an eine Zertifizierungsautorität über den Server;
- Erzeugen und Übertragen (412) einer Anfrage zum Abrufen der neuen Zertifikate an den Server, dessen Liste mit Zertifikaten aus den neuen durch die Zertifizierungsautorität ausgestellten Zertifikaten aktualisiert worden ist;
- Empfangen durch den Client-Arbeitsplatz der neuen Zertifikate; und
- Installieren (414) der neuen abgerufenen Zertifikate auf der tragbaren Vorrichtung.

10. Aktualisierungsverfahren mindestens eines Zertifikats, das in Datenspeichermitteln einer tragbaren Vorrichtung (201) gespeichert ist, die imstande ist, mit einem Client-Arbeitsplatz (202) verbunden zu werden, wobei der Client-Arbeitsplatz über ein Netzwerk (203) mit einem Server (204) verbunden ist, der eine Liste mit Zertifikaten speichert, **dadurch gekennzeichnet, dass** es die folgenden Schritte umfasst, die durch die Datenverarbeitungsmittel des Servers umgesetzt werden:
- Empfangen einer Anfrage zum Abrufen auf dem Server einer Liste mit durch einen Administrator des Servers gesteuerten Aktionen, wobei die Anfrage durch die Datenverarbeitungsmittel des Client-Arbeitsplatzes erzeugt und übertragen wurde;
- Übertragen der Liste mit den Aktionen an den Client-Arbeitsplatz;
- für jedes durch die Datenverarbeitungsmittel des Client-Arbeitsplatzes bestimmte zu aktualisierende Zertifikat, Empfangen einer Anfrage zum Ausstellen eines neuen Zertifikats von dem Client-Arbeitsplatz kommend, und Übertragen der Anfrage zum Ausstellen eines neuen Zertifikats, das durch die Datenverarbeitungsmittel des Client-Arbeitsplatzes erzeugt wird, an eine Zertifizierungsautorität;
- Aktualisieren der Liste mit Zertifikaten aus den neuen durch die Zertifizierungsautorität ausgestellten Zertifikaten;
- Empfangen einer Anfrage zum Abrufen der neuen Zertifikate, die durch die Datenverarbeitungsmittel des Client-Arbeitsplatzes erzeugt und übertragen wird;
- Übertragen der neuen abgerufenen Zertifikate zum Client-Arbeitsplatz zum Installieren auf der tragbaren Vorrichtung.

11. Computerprogramm, Programmcode-Anweisungen zum Ausführen der Schritte des Verfahrens nach einem der vorstehenden Ansprüche umfassend, wenn das Programm auf einem Computer ausgeführt wird.

12. System zum Aktualisieren von Zertifikaten, umfassend mindestens einen Client-Arbeitsplatz (202), mindestens eine tragbare Vorrichtung (201), die in Datenspeichermitteln mindestens eines der Zertifikate abspeichert, und einen Server (204), wobei das System **dadurch gekennzeichnet ist, dass** es konfiguriert ist, ein Verfahren nach einem der Ansprüche 1 bis 10 umzusetzen.

13. Client-Arbeitsplatz (202), eine Kommunikationsschnittstelle (303) mit einer tragbaren Vorrichtung umfassend, die in Datenspeichermitteln mindestens ein zu aktualisierendes Zertifikat abspeichert, und eine Kommunikationsschnittstelle (307) mit einem Server, der eine Liste mit Zertifikaten abspeichert, **dadurch gekennzeichnet, dass** er umfasst:
- ein Modul zum Erzeugen einer Anfrage zum Abrufen auf dem Server einer Liste mit durch einen Administrator des Servers gesteuerten Aktionen und Übertragen der Anfrage an den Server;
- ein Modul zum Empfangen der Liste mit Aktionen und zum Ausführen der Aktionen;
- ein Modul zum Bestimmen mindestens eines zu aktualisierenden Zertifikats auf der tragbaren Vorrichtung;
- ein Modul zum Erzeugen und Übertragen, für jedes bestimmte zu aktualisierende Zertifikat, einer Anfrage zum Abrufen eines neuen Zertifikats über den Server an eine Zertifizierungsautorität;
- ein Modul zum Erzeugen und Übertragen einer Anfrage zum Abrufen der neuen Zertifikate an den Server, dessen Liste mit Zertifikaten aus den neuen durch die Zertifizierungsautorität ausgestellten Zertifikaten aktualisiert worden ist;
- ein Modul zum Empfangen vom Server und zum Installieren auf der tragbaren Vorrichtung der neuen abgerufenen Zertifikate.

14. Server (204), eine Datenbank umfassend, die eine Liste mit Zertifikaten speichert, und eine Kommunikationsschnittstelle mit dem Client-Arbeitsplatz (202), der mit einer tragbaren Vorrichtung (201) verbunden ist, wobei die tragbare Vorrichtung in den Datenspeichermitteln mindestens ein zu aktualisierendes Zertifikat abspeichert, **dadurch gekennzeichnet, dass** er umfasst:
- ein Modul zum Empfangen einer Anfrage zum Abrufen auf dem Server einer Liste mit durch einen Administrator des Servers gesteuerten Aktionen, wobei die Anfrage durch die Datenverarbeitungsmittel des Client-Arbeitsplatzes erzeugt und übertragen wurde;
- ein Modul zum Übertragen der Liste mit den Aktionen an den Client-Arbeitsplatz;
- ein Modul zum Empfangen von dem Client-Arbeitsplatz und zum Übertragen an eine Zertifizierungsautorität einer Anfrage zum Ausstellen eines neuen Zertifikats, das durch die Datenverarbeitungsmittel des Client-Arbeitsplatzes erzeugt wird, für jedes zu aktualisierende Zertifikat, das durch die Datenverarbeitungsmittel des Client-Arbeitsplatzes bestimmt wird;
- ein Modul zum Aktualisieren der Liste mit Zertifikaten aus den neuen durch die Zertifizierungsautorität ausgestellten Zertifikaten;
- ein Modul zum Empfangen einer Anfrage zum Abrufen der neuen Zertifikate, die durch die Datenverarbeitungsmittel des Client-Arbeitsplatzes erzeugt und übertragen wird;
- ein Modul zum Übertragen der neuen abgerufenen Zertifikate zum Client-Arbeitsplatz zum Installieren auf der tragbaren Vorrichtung.

## Claims

1. Method for updating a certificate stored in the data storage means of a portable device (201) capable of being connected to a client workstation (202), said client workstation being connected via a network (203) to a server (204) storing a list of certificates **characterised in that** it comprises the implementation of steps of:
- generating, by data processing means of the client workstation, a recovery request on the server of a list of actions commanded by an administrator of the server and transmitting said request to said server;
- determining (403, 504), by data processing means of the client workstation, at least one certificate to be updated on the portable device;
- transmitting, by said server, said list of actions to said client workstation;
- executing, by data processing means of the client workstation, said actions;
- for each determined certificate to be updated, generating (406, 506) and transmitting (407, 507), by data processing means of the client workstation, a request to issue a new certificate, sent to a certification authority via said server;
- updating (411, 511), by data processing means of the server, said list of certificates stored on the server from new certificates issued by the certification authority;
- generating and transmitting, by data processing means of the client workstation, a request for recovering (412, 512) said new certificates sent to said server, transmitting (413), by the server, new certificates sent to the client workstation;
- installing (414, 514), by processing means of the client workstation on said portable device, said recovered new certificates.

2. Updating method according to claim 1, **characterised in that** said step of determining (403), by the client workstation, of certificates to be updated comprises the determination, by data processing means of the client workstation, of certificates just about to expire, or expired certificates, on said portable device.

3. Updating method according to claim 2, **characterised in that** the determination, by the data processing means of the client workstation, of certificates just about to expire, or expired certificates, comprises a comparison of the expiry date of the certificates with the current date.

4. Updating method according to any one of the preceding claims, **characterised in that** the generation (406), by data processing means of the client workstation, of a request to issue a new certificate requires a confirmation (404) from a user of the client workstation.

5. Updating method according to any one of the preceding claims, **characterised in that** said request to issue a new certificate is generated from a public key obtained following the implementation of steps of:
- generating and storing (405) by data processing means of the portable device of a new pair of keys comprising a public key and a private key;
- transmitting (405) said public key generated from the portable device to said client workstation.

6. Updating method according to any one of the preceding claims, **characterised in that** the transmission (409) of a request to issue a new certificate to said certification authority is a function of the validation (408) of said request by an administrator of said server.

7. Updating method according to claim 6, **characterised in that** if said request to issue a new certificate has been validated by the administrator, the installation (414) of said recovered new certificate comprises the removal of said certificate to be updated and the pair of corresponding stored keys.

8. Updating method according to any one of claims 6 or 7, **characterised in that** if said request to issue a new certificate has not been validated by the administrator, the new corresponding key pair generated is removed from said portable device (414).

9. Method for updating at least one stored certificate in the data storage means of a portable device capable of being connected to a client workstation (202), said client workstation being connected via a network (203) to a server (204) storing a list of certificates, **characterised in that** it comprises the following steps implemented by the data processing means of the client workstation:
- generating a recovery request on the server a list of actions commanded by an administrator of the server and transmitting said request to said server;
- determining (403) at least one certificate to be updated on the portable device;
- receiving said list of actions and executing said actions;
- for each determined certificate to be updated, generating (406) and transmitting (407) a request to issue a new certificate sent to a certification authority via said server;
- generating and transmitting (412) a request to recover said new certificates to said server, of which the list of certificates has been updated from the new certificates issued by the certification authority;
- receiving, by the client workstation, new certificates; and
- installing (414), on said portable device, said recovered new certificates.

10. Method for updating at least one certificate stored in the data storage means of a portable device (201) capable of being connected to a client workstation (202), said client workstation being connected via a network (203) to a server (204) storing a list of certificates, **characterised in that** it comprises the following steps implemented by the data processing means of said server:
- receiving a request to recover, on the server, a list of actions commanded by an administrator of the server, said request having been generated and transmitted by the data processing means of the client workstation;
- transmitting said list of actions to said client workstation;
- for each certificate to be updated, determined by the data processing means of said client workstation, receiving a request to issue a new certificate coming from the client workstation, and transmitting the request to issue a new certificate generated by the data processing means of said client workstation sent to a certification authority;
- updating said list of certificates from new certificates issued by the certification authority;
- receiving a request to recover said new certificates generated and transmitted by said data processing means of the client workstation;
- transmitting said recovered new certificates to said client workstation for installation on said portable device.

11. Computer program comprising program code instructions to execute steps of the method according to any one of the preceding claims when said program is executed on a computer.

12. System to update certificates comprising at least one client workstation (202), at least one portable device (201) storing in the data storage means, at least one of said certificates and a server (204), said system being **characterised in that** it is configured to implement a method according to any one of claims 1 to 10.

13. Client workstation (202) comprising a communication interface (303) with a portable device storing in the data storage means, at least one certificate to be updated, and a communication interface (307) with a server storing a list of certificates, **characterised in that** it comprises:
- a module for generating a request to recover, on the server, a list of actions commanded by an administrator of the server and transmitting said request to said server;
- a module for receiving said list of actions for executing said actions;
- a module for determining at least one certificate to be updated on the portable device;
- a module for generating and transmitting, for each determined certificate to be updated, a request to issue a new certificate sent to a certification authority via said server;
- a module for generating and transmitting a request to recover said new certificates to said server, of which the list of certificates has been updated from new certificates issued by the certification authority;
- a module for receiving the server and for installing, on said portable device, said recovered new certificates.

14. Server (204) comprising a database storing a list of certificates and a communication interface with a client workstation (202) connected to a portable device (201), said portable device storing, in the data storage means, at least one certificate to be updated, **characterised in that** it comprises:
- a module for receiving a request to recover, on the server, a list of actions commanded by an administrator of the server, said request having been generated and transmitted by the data processing means of the client workstation;
- a module for transmitting said list of actions to said client workstation;
- a module for receiving the client workstation and for transmitting, to a certification authority, a request to issue a new certificate, generated by the data processing means of said client workstation, for each certificate to be updated, determined by the data processing means of said client workstation;
- a module for updating said list of certificates from new certificates issued by the certification authority;
- a module for receiving a request to recover said new certificates generated and transmitted by said data processing means of the client workstation;
- a module for transmitting said recovered new certificates to said client workstation for installation on said portable device.
